# EUROPÄISCHE PATENTANMELDUNG

(11) **EP 3 804 977 A1**
(43) Veröffentlichungstag der Anmeldung: **14.04.2021**
(21) Anmeldenummer: 20400017.8
(22) Anmeldetag: 08.10.2020
(51) Int. Cl.: B32B 3/26, B32B 3/30

(54) **TRÄGERELEMENT FÜR EINE PLASTISCH VERFORMBARE MATERIALBAHN**

(30) Priorität: 10.10.2019 DE 202019004178 U
(71) Anmelder: Röttger, Wilhelm, 36103 Flieden (DE)
(72) Erfinder: Röttger, Wilhelm, 36103 Flieden (DE); Röttger, Nils, 36103 Flieden (DE); Röttger, Lars, 36103 Flieden (DE)

(57) **Zusammenfassung**

Hauptanspruch: Dehnbares, wellenförmiges Trägerelement (11) für eine plastisch verformbare Materialbahn (10) mit geschlossenen Oberflächen der Deckschichten (12) und (13), dadurch gekennzeichnet, dass das Trägerelement (11) in Verformungsrichtung mäanderförmig ausgebildet ist und die Wellenhöhe (H) weniger als 50 % der Wellenlänge (L) beträgt.

## Beschreibung

Die Erfindung betrifft ein Trägerelement für eine plastisch verformbare Materialbahn mit geschlossenen Oberflächen vorzugsweise zur Anwendung als Dichtband im Bauwesen, wobei das Trägerelement mäanderförmig ausgebildet ist.

Im Stand der Technik sind Materialbahnen bekannt, die beispielsweise unter dem Begriff "Bleiersatz" im Dachbereich angewendet werden. Sie haben die Aufgabe, Problemzonen wetterbeständig abzudichten, wie das bei Kamineinfassungen oder Dachfensteranschlüssen der Fall ist. Um diese Funktion gut zu erfüllen, muss die Materialbahn leicht und gut dichtend an die jeweilige Dachkontur anformen lassen, wozu eine hohe plastische Verformbarkeit erforderlich ist.

Aus DE 10 2008 051 728 B4 ist eine Materialbahn bekannt, die als Trägerelement eine als Feinstwelle ausgebildete Metallfolie aufweist, deren Wellentäler mit einem plastisch verformbaren Dichtmaterial ausgefüllt sind, sodass eine ca. 1,5 mm dicke Folie mit glatten Oberflächen entsteht, die miteinander völlig dicht verklebt werden können. Die verwendeten Dichtmaterialien sollen relativ weich sein und geringe Rückstellkräfte haben, sodass die eingesetzte Metallfolie vorzugsweise aus Aluminium mit 0,05 mm Dicke bestehen kann. Die Höhe der Wellkontur ist auf ca.1 mm begrenzt, damit die Gesamthöhe des Bahnmaterials von 1,5 mm aus Kostengründen eingehalten werden kann.

DE 102 30 552 B4 beschreibt eine streckbare Materialbahn mit einem Trägerelement aus dünnem Vlies und einer damit verklebten Deckschicht aus einer sehr dünnen, ca. 0,02 mm dicken Aluminium-Folie ähnlich Haushaltsfolie, die aus Mikrofalten mit bis zu 30 Falten pro cm ausgebildet sind. Diese Materialbahn lässt sich wegen der Falten sehr gut dehnen und ist auch hinreichend reißfest durch die Vliesbeschichtung, hat aber keine größere Formbeständigkeit als Krepp-Papier. Eine Verwendung als Abdichtungsmaterial ist ohne eine oberseitige Bitumenabdichtung sowie eine rückseitige, dichte Butylkautschuk-Klebeschicht nicht sinnvoll.

Wenn eine Materialbahn ähnlich DE 10 2008 728 B4 auch als Fugenband zur Abdichtung von Anlagen Wasser gefährdender Stoffe (sog. LAU-Anlagen) eingesetzt werden soll, muss sie eine gegen Benzin resistente Beschichtung definierter Dicke haben und eine definierte Festigkeit aufweisen, die nur mit einer wesentlich dickeren Alufolie zu erreichen wäre. Da das wellenartige Verformen von Aluminiumfolien durch ineinandergreifende Zahnwalzenpaare mit engem Spiel zwischen den Zähnen geschieht, bedingt eine doppelte Folienstärke ebenfalls eine doppelte Wellenhöhe, wenn die ursprüngliche Dehnbarkeit beibehalten werden soll, sodass solche Dichtbänder wesentlich dicker und damit unwirtschaftlich würden. Die Abdichtung eines Rohrdurchgangs durch eine Wand mit einem kragenähnlichen Dichtband erfordert eine sehr hohe Dehnung des äußeren Randes. Ein Rohrdurchgang eines Rohres von 100 mm Außendurchmesser durch eine Wand erfordert einen mindestens 25 mm größeren Dichtkragen, sodass dessen Außendurchmesser = 100+25+25 mm = 150 mm beträgt. Das entspricht einer Dehnung am äußeren Rand von 150/100 entsprechend 50 % des Ausgangswertes.

Zur Zeit sind zahlreiche Dichtbänder mit etwa 0,15 mm Aluminium-Folie als Wandanschluss-Systeme auf dem Markt, die allerdings nur sehr schwach gewellt sind (z.B. 3 mm Wellenhöhe bei ca. 10 mm Wellenlänge) und daher weniger als 30 % Dehnfähigkeit haben. Dies reicht im allgemeinen für die Anformung an schwach konturierte Dachpfannen aus, größere Dehnungen sind aber nicht möglich.

Aufgabe der Erfindung ist es, in Weiterentwicklung vorgenannter Anmeldungen mit wellenförmigen Trägerelementen das Trägerelement so auszugestalten, dass bei gleichzeitig sehr hoher Dehnmöglichkeit dessen Rückhaltekraft wesentlich erhöht wird, ohne die Höhe wesentlich zu verändern.

Diese Aufgabe wird erfindungsgemäß dadurch gelöst, dass ein zunächst wellenförmiges Trägerelement aus Aluminium-Folie mit einer Wellenhöhe von etwa 3 mm und 5 mm Wellenlänge erzeugt wird, das anschließend zu einer mäander- oder schwalbenschwanzähnlichen Kontur mit stark reduzierter Höhe abgeflacht wird.

Es hat sich gezeigt, dass ein solches Trägerelement durch das Abflachen etwa 2-3 mal so steif ist wie die ursprüngliche Wellkontur und somit entsprechend höhere Rückhaltekraft hat. Da wegen der größeren Wellenhöhe von 3 mm auch eine entsprechend dickere Aluminiumfolie verwendet werden kann, wird hierdurch eine insgesamt etwa 5-10-fache Steifigkeit des Trägerelements erreicht. Somit kann durch die Auswahl der Materialstärke und der Wellenhöhe des Trägerelements an die unterschiedlichsten Deckschichten angepasst werden.
Erfindungsgemäß wird vorzugsweise eine ca. 0,05 - 0,2 mm dicke Aluminium-Folie mit 1-5 mm hohen und 2-10 mm langen Wellen hergestellt und auf etwa 2/3 der ursprünglichen Höhe flach gewalzt.. Für sehr hohe Rückhaltekräfte kann beispielsweise eine weich geglühte Folie aus 0,15 mm Aluminium mit 5 mm Wellen von etwa 3 mm auf 1,5 mm Wellenhöhe reduziert werden. Mit einer Deckschicht z.B. Polysulfid, das als 2-Komponenten-Vergussmasse aufgebracht wird und nach dem Aushärten eine Härte von ca. 35 Shore A aufweist, kann es als für LAU-Anlagen zugelassenes Fugendichtband mit ca. 55 % Dehnfähigkeit eingesetzt werden.
Die Wellentäler auf der Oberseite können für andere Dichtzwecke auch mit Dispersionen oder anderen plastisch dehnbaren Dichtmaterialien wie PUR-Masse ausgefüllt werden, sodass eine geschlossene Oberfläche entsteht. Hierauf kann je nach Anwendungszweck eine weitere witterungs- oder säurebeständige Abdeckschicht aufgebracht werden. Auf der Unterseite wird vorzugsweise ein weichelastischer Butyl- oder Haftschmelzkleber mit einer Silikonschutzfolie eingesetzt. Da die Ober- und Unterseiten durch die Aluminium-Folie getrennt sind, können beliebige Materialien eingesetzt werden, ohne auf eine gegenseitige Wechselwirkung wie z.B. Weichmachereinfluss Rücksicht zu nehmen. Vielmehr können die Materialien auf jeder Seite dem jeweiligen Zweck entsprechend optimiert werden. Beispielsweise kann auf der Oberseite ein weiches, leicht verformbares Füllmaterial wie Schaumstoff, vorzugsweise geschlossenzellig, zur Auffüllung der Wellentäler mit einer witterungsbeständigen dehnbaren Lackschicht abgedeckt werden. Die Wellentäler auf der Unterseite können mit einem geschäumten Haftschmelzkleber ausgefüllt werden, der mit einer Schutzfolie abgedeckt wird. Durch die Verwendung geschäumter Materialien lassen sowohl der Materialeinsatz als auch die erforderliche Dehnkraft erheblich reduzieren.

Je nach Verwendungszweck , z.B. bei Fugenbändern in wassergefährdenden Anlagen oder bei Durchgängen auf Bitumendächern, kann es vorteilhaft sein, das Trägerelement an die Unterlage anzupassen und unbeschichtet oder nur mit einer einseitigen Beschichtung einzubauen und die Wellentäler danach mit entsprechenden pastösen Dichtmassen oder Heißbitumen bzw. durch Aufsprühen einer Klebemasse auszufüllen.

In einer vorteilhaften Erweiterung der Erfindung kann die verwendete Aluminiumfolie mit versetzten Längsschlitzen ähnlich einem Streckgitter versehen sein, wodurch zusätzlich eine Dehnung quer zur Produktionsrichtung ermöglicht wird. Hierdurch wird eine dreidimensionale Verformbarkeit des Dichtbandes erreicht.

Die nachfolgende Beschreibung zeigt weitere Einzelheiten und Merkmale der Erfindung:
Fig. 1 einen Querschnitt einer Materialbahn mit geschlossenen Oberflächen in Produktionsrichtung,
Fig. 2 einen Querschnitt des Trägerelements
Fig. 3 die Ansicht eines in Längsrichtung geschlitzten Trägerelements,
Fig. 4 einen Querschnitt einer verformten Materialbahn,
Fig. 5 einen Querschnitt einer Materialbahn, deren obere Wellentäler mit einem weichen, Füllmaterial und dehnbarer Deckschicht versehen sind,
Fig. 6 eine Abdichtung eines Rohrdurchgang durch eine Wand und
Fig. 7 eine Abdichtung eines Rohrdurchgangs durch eine Dachfläche.

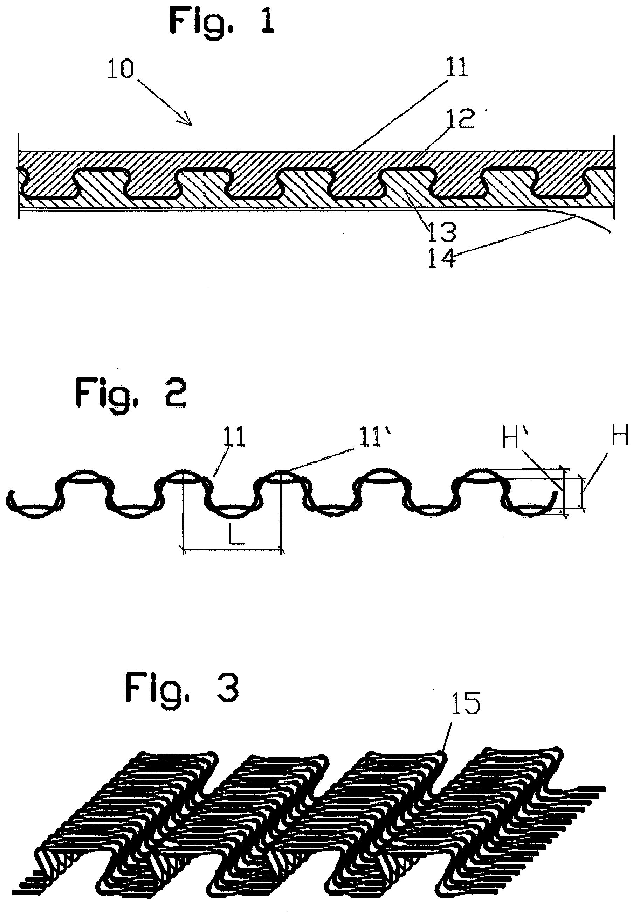

In Fig. 1 ist eine Materialbahn 10 mit einem erfindungsgemäßen Trägerelement 11 und einer oberen Deckschicht 12 und einer unteren, meistens klebefähigen Deckschicht 13 mit einer Schutzfolie 14 in vergrößertem Maßstab dargestellt. Die Oberflächen der Deckschichten 12 und 13 sind durchgehend glatt und geschlossen. Die gesamte Dicke der Materialbahn 10 kann zwischen 0,5 und 5 mm, vorzugsweise etwa bei 2 mm liegen.

In Fig. 2 ist das erfindungsgemäße Trägerelement 11 als gewellte Folie 11' vor der Verformung zu sehen. Es ist ersichtlich, dass die Form der durch Zahnräder gewellten Folie 11' in etwa das Verhältnis Höhe H' zu Wellenlänge L von 2 / 3,14 = 0,64 hat, entsprechend dem Konstruktionsprinzip einer Evolventen-Verzahnung. Bei einem Verzahnungsmodul 1,0 ist der Zahnabstand 3,14 mm und bei Modul 1,5 ergibt sich 4,7 mm als Wellenlänge L bei 3 mm Wellenhöhe H'. Durch das Flachwalzen reduziert sich die ursprüngliche Höhe H' um etwa 30 % auf H mit einem Verhältnis zur Wellenlänge L von maximal 0,5, also bei Modul 1,5 mit einer Wellenlänge L von 4,7 mm auf maximal 2,3 mm .

Fig. 3 zeigt die Möglichkeit, als Ausgangsbasis für ein erfindungsgemäßes Trägerelement 11 eine in Längsrichtung geschlitzte Folie 15 zu verwenden. Damit ist das Trägerelement 11 zusätzlich quer zur Produktionsrichtung dehnbar, sodass sich kuppelförmige Gebilde wie z.B. Walmkappen abformen lassen.

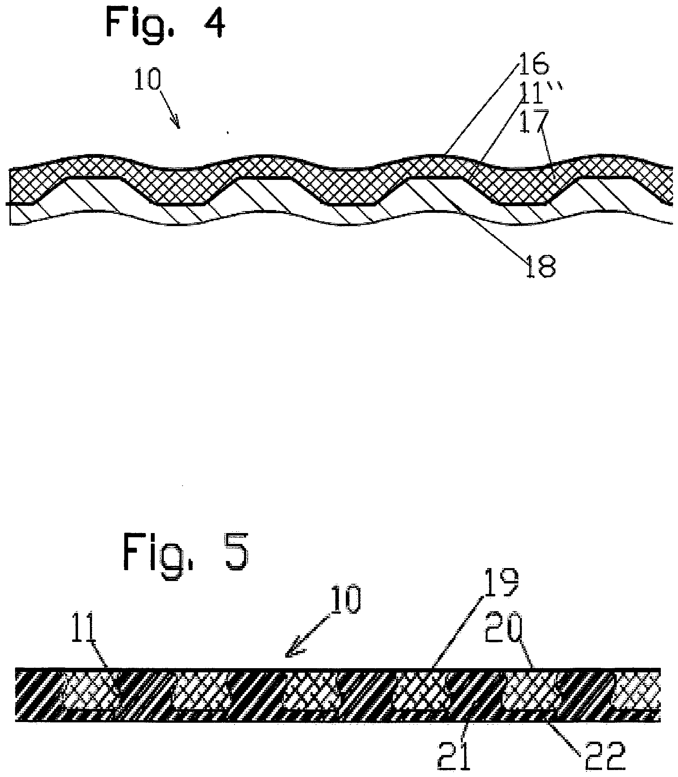

In Fig. 4 ist eine Materialbahn 10 ähnlich Fig. 1 in gestrecktem Zustand mit einem gedehnten Trägerelement 11" dargestellt. Hierbei ist eine witterungsbeständige, dehnfähige Beschichtung 16 z.B. aus Acrylatdispersion mit einer oberen Deckschicht 17 kombiniert, wobei die Deckschicht 17 aus Kostengründen aus einem relativ weichem Füllmaterial bestehen kann, das nicht witterungsbeständig ist, während die untere Deckschicht 18 aus einem Haftschmelzkleber besteht.

In Fig. 5 wird eine Materialbahn 10 dargestellt, bei der die oberen Wellentäler 19 des Trägerelements 11 mit einem einem leichten Füllmaterial, z.B. einem Polymerschaum, minimal ausgefüllt und mit einer dehnfähigen Beschichtung 20 abgedeckt sind, sodass eine sehr geringe Gesamtstärke der Materialbahn 10 erreicht wird und gleichzeitig die Materialkosten minimiert werden. Die unteren Wellentäler 21 sind im allgemeinen so ausgefüllt, dass mindestens eine dünne Klebeschicht 22 vorhanden ist, um eine durchgehende Verklebung auf dem Untergrund zu gewährleisten.

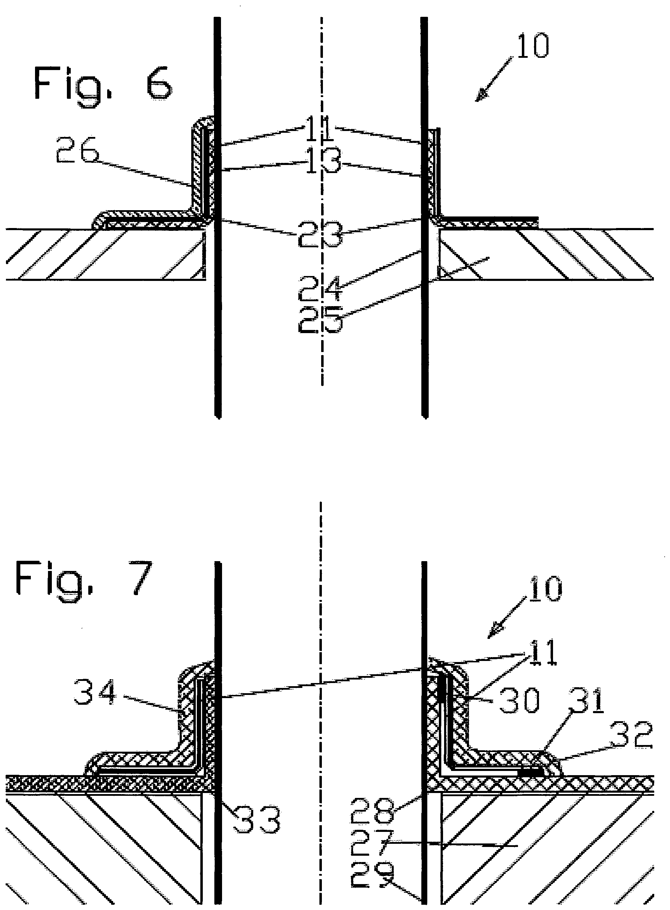

In Fig. 6 wird eine Materialbahn 10 mit einem erfindungsgemäßen Trägerelement 11 und einer unteren Deckschicht 13 als umlaufende Manschette mit einer Knicklinie 23 dargestellt, wobei die untere Deckschicht 13 je zur Hälfte mit dem Rohr 24 und einer Wand 25 verklebt ist. Hierdurch kann eine ausreichende Abdichtung des Rohrdurchgang gewährleistet sein, zumal wenn kein Witterungseinfluss besteht, sodass eine weitere oberseitige Beschichtung nicht zwingend notwendig ist. Zum zusätzlichen Schutz der Oberfläche des Trägerelements 11 und zur besseren Abdichtung an den Übergängen vom Rohr 24 bzw. der Wand 25 kann diese allerdings vor Ort mit einer Beschichtung 26 abgedeckt werden, die dann nicht dehnfähig sein muss und dadurch kostengünstiger ist. Ein erfindungsgemäßer Vorteil des erfindungsgemäßen Trägerelements 11 besteht darin, die Materialbahn 10 mit einer oder mehreren Knicklinien auszustatten, vorzugsweise in der Mitte, aber auch in einem definierten Abstand zu den Rändern. Dies kann durch eine leichte Verringerung der Höhe H des Trägerelement 11 gemäß Fig. 2 geschehen.

Fig. 7 zeigt einen Rohrdurchgang beispielsweise durch ein Flachdach 27 mit einer Abdichtung 28 aus Flüssigkunststoff oder Bitumen, die um das Rohr 29 hochgezogen ist. Die Materialbahn 10 besteht aus dem erfindungsgemäßen Trägerelement 11 und unterseitigen Dichtbändern 30 und 31 zur Fixierung auf der Abdichtung 28 und kann vor Ort mit einer äusseren Beschichtung 32 abgedeckt werden, die ebenfalls nicht dehnfähig sein muss. Es kann auch sinnvoll sein, das Trägerelement 11 nur zu grundieren bzw. dünn zu beschichten und unmittelbar auf eine noch klebefähige Beschichtung 33 aufzubringen sowie nach dem Aushärten mit einer äusseren Abdeckschicht 34 z.B. durch Sprühern oder Streichen witterungsbeständig zu machen. Die nachträglichen Beschichtungen 32 bzw. 34 können an die speziellen baulichen Anforderungen angepasst werden, sodass diese Ausführungen der Materialbahn 10 gegenüber einer Ausführung mit einer kompletten Beschichtung mit den Deckschichten 12 und 13 vorteilhaft sein können.

## Patentansprüche

1. Dehnbares, wellenförmiges Trägerelement (11) für eine plastisch verformbare Materialbahn (10) mit geschlossenen Oberflächen der Deckschichten (12) und (13),
**dadurch gekennzeichnet, dass**
das Trägerelement (11) in Verformungsrichtung mäanderförmig ausgebildet ist und die Wellenhöhe (H) weniger als 50 % der Wellenlänge (L) beträgt.

2. Dehnbares, wellenförmiges Trägerelement (11) nach Anspruch 1,
**dadurch gekennzeichnet,**
**dass** das Trägerelement (11) aus einer weichen Aluminiumfolie besteht.

3. Dehnbares, wellenförmiges Trägerelement (11) nach Anspruch 1 oder 2
**dadurch gekennzeichnet,**
**dass** die Wellentäler (19) und oder (21) der Materialbahn (10) mit schaumförmigem Material gefüllt sind.

4. Dehnbares, wellenförmiges Trägerelement (11) nach einem der vorhergehenden Ansprüche,
**dadurch gekennzeichnet,**
**dass** das Trägerelement (11) aus einer in Verformungsrichtung geschlitzten Folie (15) besteht.

5. Dehnbares, wellenförmiges Trägerelement (11) nach einem der vorhergehenden Ansprüche,
**dadurch gekennzeichnet,**
**dass** die Wellentäler (19) und oder (21) der Materialbahn (10) nur teilweise ausgefüllt oder nur mit einer Grundierung versehen sind.
